# EUROPEAN PATENT APPLICATION

(11) **EP 2 503 421 A1**
(43) Date of publication of application: **26.09.2012**
(21) Application number: 11382080.7
(22) Date of filing: 25.03.2011
(51) Int. Cl.: G05B 19/418, B31F 1/28

(54) **System for controlling the warp status of a corrugated cardboard sheet in the production line**

(71) Applicant: Sandoval Thiele, Gustavo Eduardo, 08173 Sant Cugat del Valles (ES); Sandoval Thiele, Gustavo, 08348 Cabrils (ES)
(72) Inventor: Sandoval Thiele, Gustavo Eduardo, 08173, SANT CUGAT DEL VALLES (ES)
(74) Representative: Ponti Sales, Adelaida

(57) **Abstract**

System (20) for controlling the warp status of a corrugated cardboard sheet (1,1') in the production line (5), comprising measuring means (21) of the flatness of the sheet of cardboard (1,1'), a database (22) that stores a series of physical characteristics of the different types of raw material of papers (2,3) and adhesive (2a) of the product to be produced, processing means (23) that calculate the optimal parameters of humidity, temperature, stress and pressure depending on the physical characteristics of the product chosen provided by said database (22), humidity and temperature measuring sensors (24) of said product throughout the production line, and control means (25) that manage the data from said measuring means (21) of the flatness and from said humidity and temperature measuring sensors (24), and control regulation devices (26) capable of maintaining levels of humidity, temperature, stress and pressure required in accordance with the optimal parameters calculated by said processing means (23) according to the type of product, so that said values of humidity, temperature, stress and pressure required are automatically adjusted at each instant and with each change of raw materials of the product to be produced, thus obtaining a correct flatness of the corrugated cardboard sheet (1,1').

## Description

The present invention relates to system for controlling the warp status of a corrugated cardboard sheet in the production line.

### BACKGROUND OF THE INVENTION

It is known that a single sheet of corrugated cardboard comprises two outer sheets of paper called "liner" paper and an internal sheet of corrugated paper called "fluting" paper disposed between said sheets of "liner" paper, and glued together by the application of an adhesive.

The manufacturing method of a single sheet of cardboard is carried out in two phases; in a first phase a layer called "single face" is produced consisting of a liner paper and a fluting paper glued together, and in a second phase a liner paper is placed glued on said single face layer.

Starting from a single face layer and adding supplementary single face layers and finally placing an outer layer of liner paper double or triple sheets are obtained.

To produce the corrugated cardboard, which is then turned into raw material for the production of cardboard boxes, a production line called "corrugation line" is used which is described below.

In the corrugation line generally one or two corrugation units are used to produce single face layers.

In this production line, reel stands are used which are fed with paper reels continuously, by means of adapted spools. These splicers are responsible for connecting the reel under production with the following reel when the reel is consumed or when a reel type is changed, whether due to a change in quality of the paper, or a change in width of the paper. This means it is possible to go from manufacturing one type of cardboard to another in accordance with customers' orders without interrupting the production.

In each corrugation unit or also called single face unit, the liner and fluting papers are heated by means of preheated cylinders that use steam at 15 bar and 190°C. The quantity of heat applied is controlled by regulating the area of contact between paper and preheated cylinders. Typically, this regulation is manual, defined by the operator.

The fluting paper is corrugated by means of toothed rollers and an adhesive is later added, based on starch and water. After this operation, the fluting paper comes into contact with the liner paper, and pressure and heat are applied to both papers to allow the water to evaporate from the adhesive, so that said adhesive gelatinizes and achieves a good gluing of the two layers of liner and fluting papers.

The product thus obtained is said single face, which passes to a duplex bridge that acts as a lung to absorb variations in velocity between the different parts of the production line.

After passing through the duplex bridge, the single face layer reaches the triplex and double backer glue unit, consisting of a reel of liner paper by way of an outer cover and two units of gluing rollers, where said single face layer again receives heat and adhesive, and is glued with the other layers that compose the final product, i.e. another single face layer and a liner paper if it is double cardboard or just a liner paper if it is a single cardboard.

To achieve gluing between the different layers, the final product must pass through a hot table where various sections of plates heated with steam are responsible for applying heat to evaporate the water. Pressure is also applied to obtain a good gluing.

In this phase, a good control of the humidity of each layer is critical, as well as of the final humidity of the cardboard, since this defines if the final cardboard has the suitable flatness or, in contrast, is curved, an effect known as "warp".

The cardboard thus obtained passes through a set of transversal and longitudinal cutters to obtain the end sheets of cardboard, which are stacked by stackers. It is at this point where the warping phenomenon becomes evident.

At present, the stacker operator is responsible for detecting if there is warping and alerting the other line operators so that they try to correct the problem.

To change from one type of cardboard to another the types of papers used must be changed, so that when the cardboard reaches the cutters it goes from one paper to another in the least amount of metres possible to reduce the non-conforming product. This entails that the paper splices and, therefore, the reel type changes must be carried out in a scheduled form knowing the quantities of product in each area of the production line, determined by the lungs or duplex bridges existing in the lines.

This has great implications on the process quality and productivity, since each paper type change entails that the physical properties of the raw material (such as heat capacity, porosity, density, roughness, etc.) are different, for which reason the adjustments of the manufacturing parameters must be completely different. If this is not performed in this manner, a great quantity of non-conforming product is produced, due to problems of gluing, warping, etc.

The sheets produced by the corrugation line are stored in an intermediate warehouse until they are passed to the transformation area where there are several process lines in charge of die-cutting, printing and folding until achieving the final product. The loss or waste produced in this area is the most expensive and is determined by the quality of the sheet, i.e. flatness, suitable humidity and structural resistance, and the typical problems of converting machines, such as the poor adjustment of colours, stencils or die-cutting templates, jamming, etc.

Currently, quality control is carried out manually, wherein the operator takes a box randomly to check if it corresponds to the specifications, which causes a great amount of defects to be detected by the end customer, generating complaints and returns.

At present, the great majority of corrugation lines are based on a visual inspection by the operators to control the required flatness of the final product. In these lines, the operator is responsible for taking the pertinent actions to correct the problem in the shortest possible time to reduce the impact of the non-conforming product. Elements have been developed in recent years to correct these problems.

Patent application GB 2415259 A discloses a method to detect warping in planar materials, by a set of laser-type sensors that measure the distance at different points throughout the width of the material, calculating a curve that provides a flatness profile. However, the correction of the flatness problem continues being based on the operator's experience.

Patent application EP 1473147 Al discloses a system for the correction of warping in corrugated cardboard sheets that includes a measuring system based on artificial vision cameras and warping correction means. In this case, the correction of the warping is based on rules for the application of modifications on the regulated process variables.

Both patent applications have drawbacks that are described below:
- The correction rules are defined empirically based on experience or current know-how, without bearing in mind the physics of the manufacturing process, i.e. transmission of heat, evaporation, etc. The rules automate the same operations that are performed today by an operator to correct the flatness problem.
- The physical problems of the product are not considered nor in what way do they affect flatness. This implies that the rules have to be corrected by human intervention or the system must memorize new corrections every time the raw material is different or its behaviour changes.

These deficiencies are shared by all systems existing on the market, which implies a great dependency on the human factor:
- Initially, to define the set of starting rules and parameters,
- It is necessary to maintain all these parameters throughout the life of the system since the manufacturing process is not static (the raw material comes from different suppliers, the manufacturers change the characteristics of the raw material, new products are incorporated, etc),
- Corrections during the manufacturing process to act if a flatness problem is detected.

### DESCRIPTION OF THE INVENTION

The objective of the system for controlling the warp status of a corrugated cardboard sheet in the production line of the present invention is to resolve the drawbacks that arise in the systems known in the state of the art, providing a totally automated flatness control system that makes it possible to obtain sheets of corrugated cardboard with the required quality and without warping problems.

The system for controlling the warp status of a corrugated cardboard sheet in the production line of the present invention is of the type comprising measuring means of the flatness of the sheet of cardboard, and is characterized in that it comprises a database that stores a series of physical characteristics of the different types of raw material of papers and adhesive of the product to be produced, processing means that calculate the optimal parameters of humidity, temperature, stress and pressure depending on the physical characteristics of the product chosen provided by said database, humidity and temperature measuring sensors of said product throughout the production line, and control means that manage the data from said measuring means of the flatness and from said humidity and temperature measuring sensors, and control regulation devices capable of maintaining levels of humidity, temperature, stress and pressure required in accordance with the optimal parameters calculated by said processing means according to the type of product, so that said values of humidity, temperature, stress and pressure required are automatically adjusted at each instant and with each change of raw materials of the product to be produced, thus obtaining a correct flatness of the corrugated cardboard sheet.

In this way, instead of using correction rules as occurred with the systems known in the state of the art, the system of the invention is based on the calculation of the optimal working parameters according to the product's characteristics, since each raw material forming the sheet of cardboard has very different physical behaviours, such as the capacity of heat transmission, porosity, structural resistance, deformation, etc.

Therefore, the system is capable of predicting the suitable values for heat application, humidity, etc. For this purpose, the system incorporates said database of the products used, wherein each product is characterized from the physical properties that have most influence on the loss of flatness or warping.

Thanks to the temperature and humidity sensors, it is possible to measure the evolution of these two parameters throughout the production process, since the problem of warping is determined by a gradient of humidity between the different layers that form the corrugated cardboard sheet.

The regulating devices that collect the measurement of these sensors make it possible to maintain suitable temperature and humidity levels required by each product to guarantee the absence of warping, whilst minimizing energy consumption.

Another advantage is that the system makes it possible to memorize the quality obtained from each paper supplier and the process parameters helping in the selection process of suppliers and raw materials as well as in the product design. This is achieved on correlating problems in the final product with the use of a certain paper or the combination of incompatible papers.

According to an embodiment of the invention, the measuring means of the flatness comprise a combination of laser devices capable of projecting a line throughout the width of the sheet of cardboard and of artificial vision cameras that allow a precise measurement of the flatness defect by means of triangulation.

Thanks to this combination of laser devices and artificial vision cameras a more accurate measurement of the flatness is achieved. As it is not based on isolated lasers, as occurred in the state of the art, the flatness profile is obtained without the need for interpolation calculations, which increases the reliability, accuracy and speed of the accuracy response.

On the other hand, the use of artificial vision cameras allows adding functionalities to this flatness sensor such as the detection of defects in the final sheet (such as sheets of incorrect dimensions, sheets with stains or holes, etc), as well as the calculation of the number of sheets produced which is important to guarantee that the quantity produced corresponds to the order of the customer buying said sheets.

Advantageously the control means include a master regulation loop to manage the set of regulation devices. This regulation loop manages the whole network of system regulators, bearing in mind the process's physical relations, so that all variables adjust to the requirements at each instant and performing the suitable actions to avoid flatness problems, whilst guaranteeing the required humidity in the final sheet. In this way, the system is organized in a hierarchical control structure.

Preferably, the control means are capable of electronically linking with laboratory test results to keep said database of raw materials and physical characteristics updated.

Alternatively, the system comprises a control unit equipped with an interface and a display screen to manage the control means by means of a user.

Preferably, the transmission of the system data is performed by a real-time Ethernet connection with the computer network of the production plant.

### BRIEF DESCRIPTION OF THE DRAWINGS

In order to facilitate the description of the aforementioned, drawings are attached wherein, schematically and by way of non-limiting example, a practical case of embodiment is represented of the system for controlling the warp status of a corrugated cardboard sheet in the production line of the invention, wherein:
figure 1 is a schematic view of the conventional manufacturing process of a single sheet of corrugated cardboard;
figure 2 is a schematic view of a conventional production line or corrugation line of the sheet of corrugated cardboard;
figure 3 is a schematic view of a conventional corrugation unit for the manufacturing of a single face layer;
figure 4 is a schematic view of the gluing process of the single face layers and of the production of the final sheet; and
figure 5 is a block diagram of the flatness control system of the present invention.

### DESCRIPTION OF A PREFERRED EMBODIMENT

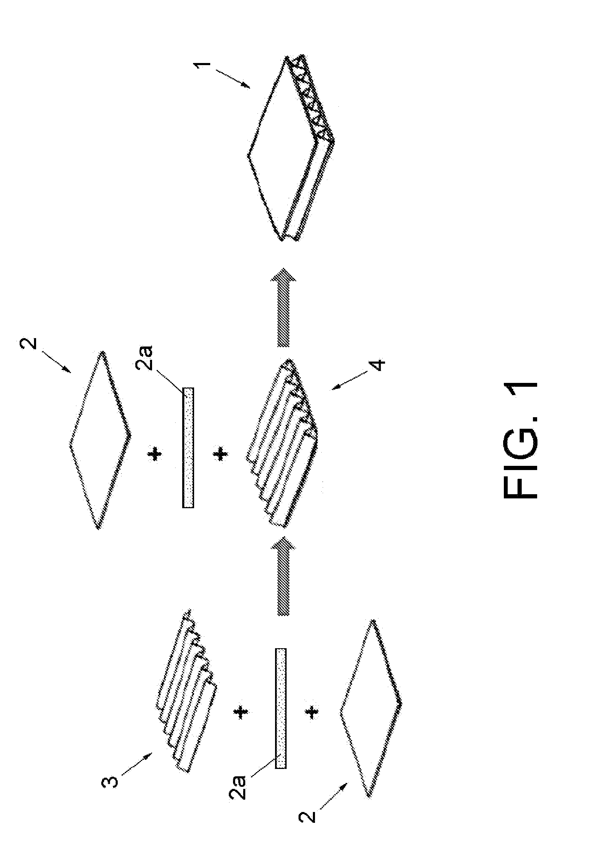

Making reference to figure 1, a single sheet of corrugated cardboard 1 comprises two outer paper sheets 2 called "liner" paper and an inner sheet of corrugated paper 3 called "fluting" paper disposed between said sheets of "liner" paper 2, and glued together by the application of an adhesive or glue 2a.

The manufacturing method of a single sheet of cardboard 1 is carried out in two phases; in a first phase a layer 4 called "single face" is produced consisting of a liner paper 2 and a fluting paper 3 glued together, and in a second phase a liner paper 2 is placed glued on said single face layer 4.

Starting from a single face layer 4 and adding supplementary single face layers 4 and finally placing an outer layer of liner paper 2 double or triple sheets are obtained.

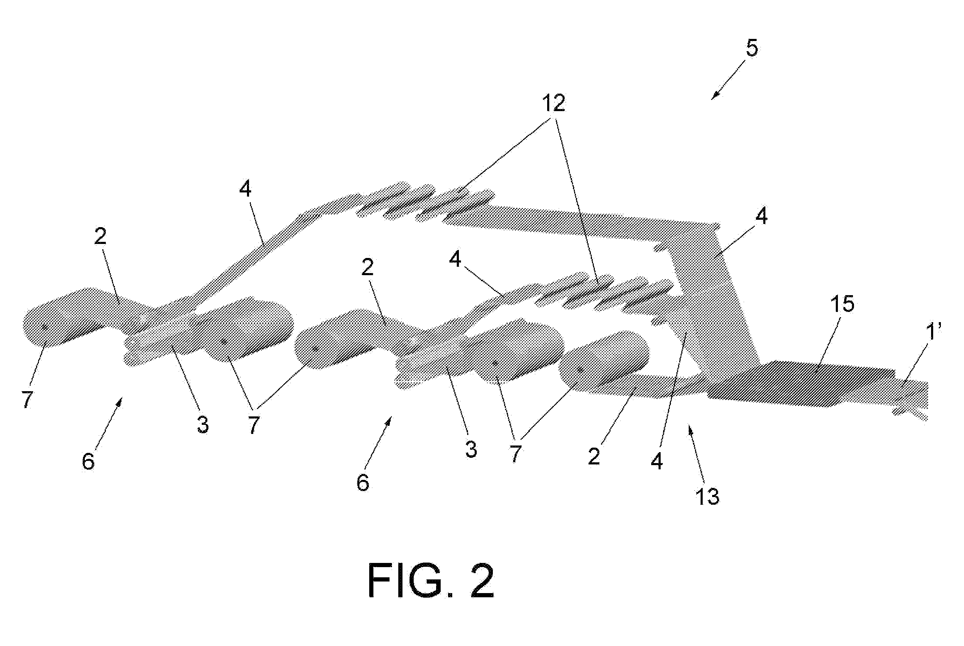

As can be observed in figure 2, to produce the corrugated cardboard, which is then turned into raw material for the production of cardboard boxes, a production line 5 called "corrugation line" is used, generally comprising one or two corrugation units 6 for the production of the single face layers 4.

In this corrugation line 5, reel stands are used which are fed with paper reels 7 continuously, by means of adapted spools. These splicers are responsible for connecting the reel under production with the following reel when the reel is consumed or when a reel type is changed, whether due to a change in quality of the paper, or a change in width of the paper. This means it is possible to go from manufacturing one type of cardboard 1 to another in accordance with customers' orders without interrupting the production.

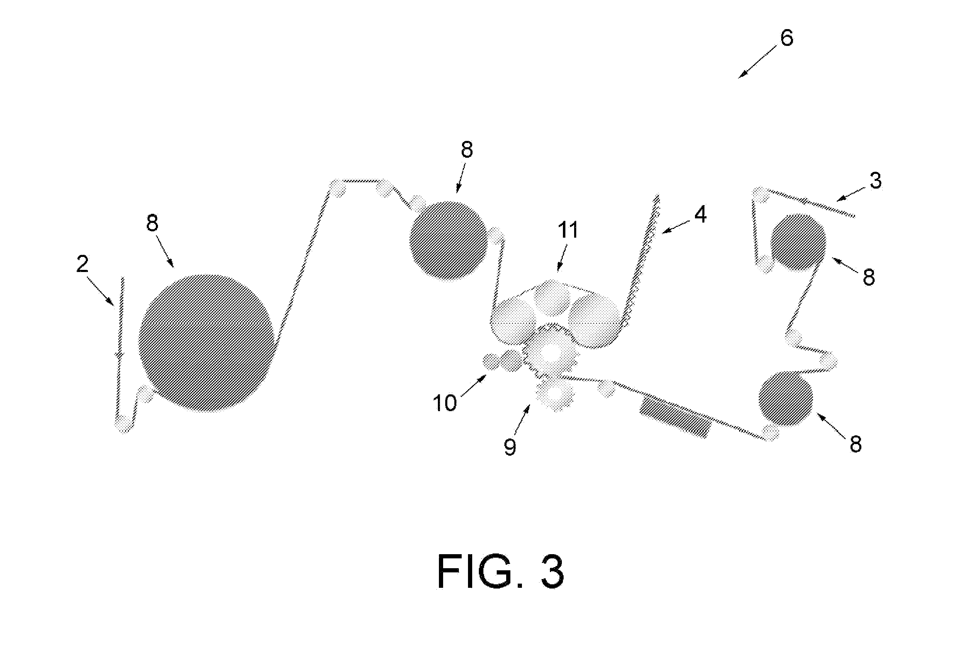

Making reference to figure 3, in each corrugation unit 6 or also called single face unit, the liner 2 and fluting 3 papers are heated by means of preheated cylinders 8 that use steam at 15 bar and 190 °C. The quantity of heat applied is controlled by regulating the area of contact between paper 2,3 and preheated cylinders 8.

The fluting paper 3 is corrugated by means of toothed rollers 9 and an adhesive or glue is later added, based on starch and water, by gluing rollers 10. After this operation, the fluting paper 3 comes into contact with the liner paper 2, and pressure and heat are applied to both papers 2,3 by a press roller or band system 11 to allow the water to evaporate from the adhesive, so that said adhesive gelatinizes and achieves a good gluing of the two layers of liner 2 and fluting 3 papers. The product thus obtained is said single face 4.

Said single face layer 4 passes to a duplex bridge 12 that acts as a lung to absorb variations in velocity between the different parts of the production line 5 (see figure 2).

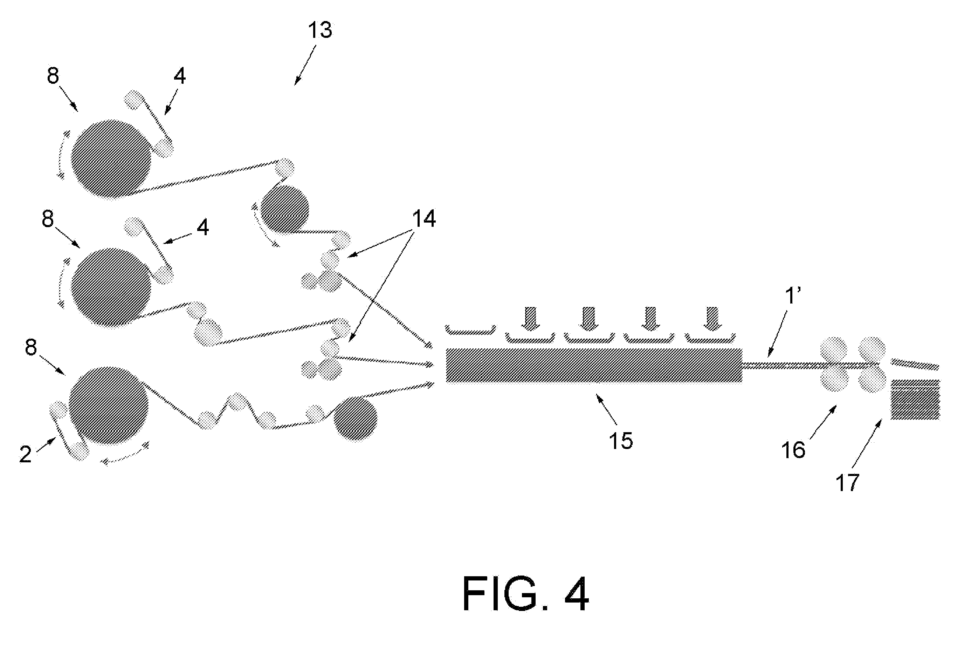

As can be observed in figure 4, after passing through the duplex bridge 12, the single face layer 4 reaches the triplex and double backer glue unit 13, consisting of a reel of liner paper 2 by way of an outer cover and two units of gluing rollers 14. In this phase, the single face layer 4 again receives heat by preheated rollers 8 and adhesive by the gluing rollers 14, and is glued with the other layers that compose the final product, i.e. another single face layer 4 and a liner paper 2 if it is double cardboard 1' (as represented in figures 2 and 4) or just a liner paper 2 if it is a single cardboard 1 (see figure 1).

To achieve gluing between the different layers, the final product must pass through a hot table 15 where various sections of plates heated with steam are responsible for applying heat to evaporate the water. Pressure is also applied to obtain a good gluing.

In this phase, a good control of the humidity of each layer is critical, as well as of the final humidity of the cardboard, since this defines if the final cardboard 1' has the suitable flatness or, in contrast, is curved, an effect known as "warp".

The cardboard thus obtained passes through a set of transversal and longitudinal cutters 16 to obtain the end sheets of cardboard 1', which are stacked by stackers 17. It is at this point where the warping phenomenon becomes evident.

To change from one type of cardboard to another the types of papers 2,3 used must be changed, so that when the cardboard reaches the cutters 16 it goes from one paper to another in the least amount of metres possible to reduce the non-conforming product. This entails that the paper splices and, therefore, the reel 7 type changes must be carried out in a scheduled form knowing the quantities of product in each area of the production line, determined by the lungs or duplex bridges 12 existing in the lines.

The sheets produced by the corrugation line are stored in an intermediate warehouse until they pass to the transformation area where there are several process lines in charge of die-cutting, printing and folding until achieving the final product.

Below, the system 20 for controlling the warp status of a corrugated cardboard sheet in the production line is described.

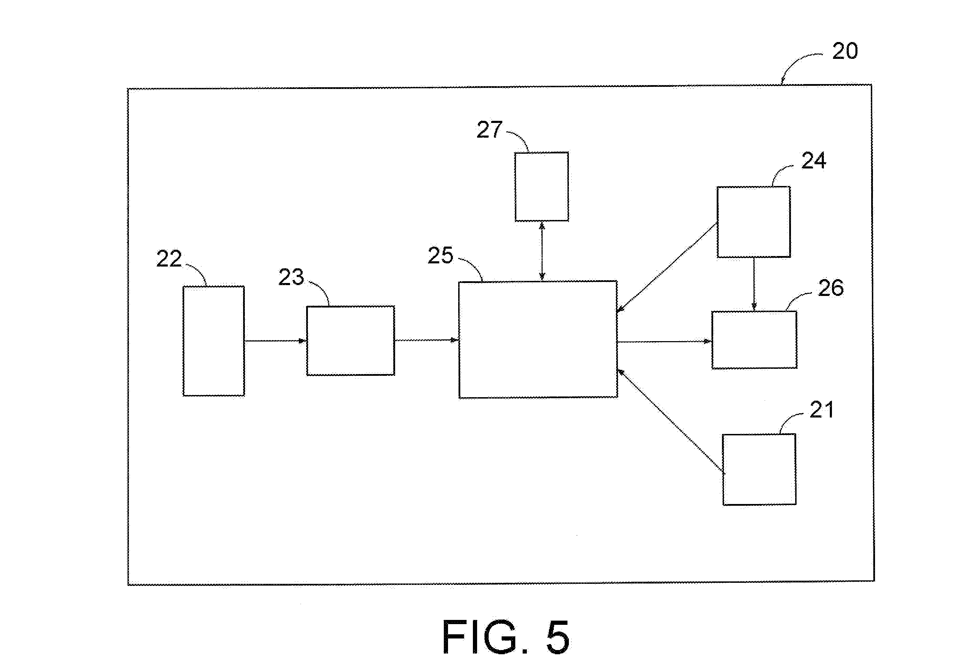

Making reference to figure 5, the system 20 for controlling the warp status of a corrugated cardboard sheet 1,1' in the production line 5 comprises:
- measuring means of the flatness 21 that includes a combination of laser devices capable of projecting a line throughout the width of the sheet of cardboard and of artificial vision cameras that allow a precise measurement of the flatness defect by means of triangulation,
- a database 22 that stores a series of physical characteristics of the different types of raw material of papers and adhesive of the product to be produced,
- processing means 23 that calculate the optimal parameters of humidity, temperature, stress and pressure depending on the physical characteristics of the product chosen provided by said database 22,
- humidity and temperature measuring sensors 24 of said product throughout the production line 5, and
- control means 25 that manage the data from said measuring means 21 of the flatness and from said humidity and temperature measuring sensors 24, and control regulation devices 26 capable of maintaining levels of humidity, temperature, stress and pressure required in accordance with the optimal parameters calculated by said processing means 23 according to the type of product, so that said values of humidity, temperature, stress and pressure required are automatically adjusted at each instant and with each change of raw materials of the product to be produced, thus obtaining a correct flatness of the corrugated cardboard sheet 1,1'.

In this way, instead of using correction rules as occurred with the systems known in the state of the art, the system 20 of the invention is based on the calculation of the optimal working parameters according to the product's characteristics, since each raw material (paper) forming the sheet 1,1' has very different physical behaviours, such as the capacity of heat transmission, porosity, structural resistance, deformation, etc.

Therefore, the system is capable of predicting the suitable values for heat application, humidity, etc. For this purpose, the system incorporates said database 22 of the products used, wherein each product is characterized from the physical properties that have most influence on the loss of flatness or warping.

Thanks to the temperature and humidity sensors 24, it is possible to measure the evolution of these two parameters throughout the production process, since the problem of warping is determined by a gradient of humidity between the different layers that form the corrugated cardboard sheet 1,1'.

The regulating devices 26 that collect the measurement of these sensors 24 make it possible to maintain suitable temperature and humidity levels required by each product to guarantee the absence of warping, whilst minimizing energy consumption.

Thanks to this combination of laser devices and artificial vision cameras of the measuring means of the flatness 21 of the cardboard sheet 1,1' a more accurate measurement of the flatness is achieved. As it is not based on isolated lasers, as occurred in the state of the art, the flatness profile is obtained without the need for interpolation calculations which increases the reliability, accuracy and speed of the accuracy response.

On the other hand, the use of artificial vision cameras allows adding functionalities to this flatness sensor such as the detection of defects in the final sheet (such as sheets of incorrect dimensions, sheets with stains or holes, etc.), as well as the calculation of the number of sheets produced which is important to guarantee that the quantity produced corresponds to the order of the customer.

The control means 25 include a master regulation loop to manage the set of regulation devices 26. This regulation loop manages the whole network of system regulators 26, bearing in mind the process's physical relations, so that all variables adjust to the requirements at each instant and performing the suitable actions to avoid flatness problems, whilst guaranteeing the required humidity in the final sheet 1,1'. In this way, the system is organized in a hierarchical control structure.

The control means 25 are capable of electronically linking with laboratory test results to keep said database 22 of raw materials and physical characteristics updated.

The system 20 also comprises a control unit 27 equipped with an interface and a display screen to manage the control means 25 by means of a user.

The transmission of the system 20 data is performed by a real-time Ethernet connection with the computer network of the production plant.

## Claims

1. System (20) for controlling the warp status of a corrugated cardboard sheet (1,1') in the production line (5), comprising measuring means (21) of the flatness of the sheet of cardboard (1,1'), **characterized in that** it comprises a database (22) that stores a series of physical characteristics of the different types of raw material of papers (2,3) and adhesive (2a) of the product to be produced, processing means (23) that calculate the optimal parameters of humidity, temperature, stress and pressure depending on the physical characteristics of the product chosen provided by said database (22), humidity and temperature measuring sensors (24) of said product throughout the production line, and control means (25) that manage the data from said measuring means (21) of the flatness and from said humidity and temperature measuring sensors (24), and control regulation devices (26) capable of maintaining levels of humidity, temperature, stress and pressure required in accordance with the optimal parameters calculated by said processing means (23) according to the type of product, so that said values of humidity, temperature, stress and pressure required are automatically adjusted at each instant and with each change of raw materials of the product to be produced, thus obtaining a correct flatness of the corrugated cardboard sheet (1,1').

2. System (20), according to claim 1, wherein the measuring means (21) of the flatness comprise a combination of laser devices capable of projecting a line throughout the width of the sheet of cardboard (1,1') and of artificial vision cameras that allow a precise measurement of the flatness defect by means of triangulation.

3. System (20), according to claim 1, wherein the control means (25) include a master regulation loop to manage the set of regulation devices (26).

4. System (20), according to claim 1, wherein the control means (25) is capable of electronically linking with laboratory test results to keep said database (22) of raw materials and physical characteristics updated.

5. System (20), according to claim 1, comprising a control unit (27) equipped with an interface and a display screen to manage the control means (25) by a user.

6. System (20), according to claim 1, wherein the transmission of the system data is performed by a real-time Ethernet connection with the computer network of the production plant.
